(19) Europäisches Patentamt
European Patent Office
Office européen des brevets

(11) EP 1 704 684 B1

(12) EUROPEAN PATENT SPECIFICATION

(45) Date of publication and mention
of the grant of the patent:
**25.05.2011 Bulletin 2011/21**

(51) Int Cl.:
***H04L 12/56*** *(2006.01)*

(21) Application number: **03789396.3**

(86) International application number:
**PCT/EP2003/014789**

(22) Date of filing: **23.12.2003**

(87) International publication number:
**WO 2005/064862 (14.07.2005 Gazette 2005/28)**

(54) **METHOD AND DEVICE FOR CONTROLLING A QUEUE BUFFER**

VERFAHREN UND VORRICHTUNG ZUR PUFFERSTEUERUNG

PROCEDE ET DISPOSITIF POUR CONTROLER UN TAMPON DE FILE D'ATTENTE

(84) Designated Contracting States:
**AT BE BG CH CY CZ DE DK EE ES FI FR GB GR HU IE IT LI LU MC NL PT RO SE SI SK TR**

(43) Date of publication of application:
**27.09.2006 Bulletin 2006/39**

(73) Proprietor: **Telefonaktiebolaget LM Ericsson (publ)**
**164 83 Stockholm (SE)**

(72) Inventors:
• **WIEMANN, Henning**
**52062 Aachen (DE)**

• **LUDWIG, Reiner**
**52393 Huertgenwald (DE)**

(74) Representative: **HOFFMANN EITLE**
**Patent- und Rechtsanwälte**
**Arabellastraße 4**
**81925 München (DE)**

(56) References cited:
**EP-A- 1 249 972     US-A- 5 901 147**

## Description

[Field of the invention]

The present invention relates to a method and device for controlling a queue buffer, where said queue buffer queues data units in one or more queues.

[Background of the invention]

In data unit based communication, i.e. in which an information to be transmitted is divided into a plurality of units, and the individual units are sent over a communication network, it is known to provide queue buffers at links along the network, such that data units transported over such a link may be buffered. The buffer may be a sending or output buffer (i.e. a buffer for data units that are to be sent over the outgoing link) or a receiving or input buffer (i.e. a buffer for data units that have been sent over the incoming link).

Such units for transporting data may carry a variety of names, such as protocol data units, frames, packets, segments, cells, etc., depending on the specific context, the specific protocol used and certain other conventions. In the context of the present document, all such units of data shall generically be referred to as data units.

The procedures for placing data units into a queue, advancing them in the queue, and removing data units from the queue are referred to as queue management or queue control.

Many concepts of queue management are known, including such concepts in which a queue length parameter (e.g. the absolute length of queue or an average length) is monitored and compared with a length threshold value, in order to perform a congestion notification procedure if the threshold value is exceeded. Such a congestion notification procedure can consist in dropping a data unit and/or in marking data units (e.g. setting a congestion notification flag in data units). Various examples for such management concepts, like drop-on-full or random early detection (RED) are described in the introduction of EP-A-1 249 972. As a consequence, a repetition is not necessary here.

EP-A-1 249 972 proposes a scheme in which the length threshold value that is to be compared with the queue length parameter is automatically updated on the basis of one or more characteristics of the link over which the queued data units are to be sent. By adapting the automatic threshold to one or more link characteristics, a very flexible form of active queue management is obtained that may provide improved throughput and reduced delay, especially over links that have time varying characteristics such as wireless links. Particularly , EP-A- 1 249 972 suggests estimating a link capacity value based on the link's data rate and adapting the threshold value on the basis of the estimated link capacity.

[Object of the invention]

It is the object of the present invention to provide an improved method and device of queue buffer management.

[Summary of the invention]

This object is achieved by a method and device as described in the independent claims of the present application. Advantageous embodiments are described in the dependent claims.

In accordance with the present invention, in a system where queue buffer control or queue buffer management comprises determining a value of a length parameter related to the queue length, comparing this value with a threshold and performing a congestion notification procedure if the threshold is exceeded, and in which an automatic threshold adaptation procedure is provided, the automatic threshold adaptation procedure is operable in one of at least a first and a second adaptation mode, where the first adaptation mode is associated with minimizing.queuing delay and adapts the threshold value ($L_{th}$) on the basis of $n \cdot LC$, where LC represents the estimated link capacity value and $n=1$, and the second adaptation mode is associated with maximizing utilization and adapts said threshold value ($L_{th}$) on the basis of $m \cdot LC$, where $m>1$ and $m>n$.

In accordance with the present invention, the method of controlling a queue buffer and the queue buffer controller are arranged in such a way that at least two different operation modes are possible, one provided for reducing queuing delay, the other provided for increasing utilization. In the mode for increasing utilization, the threshold value is set higher than in the mode for reducing queuing delay. The reason is that if the threshold is higher, then the average queue length will be longer, but a sender will be able to put more load (e.g. increase the sending window or the sending rate) on the network transporting the data units, because congestion notifications are sent less frequently due to the higher threshold. This enhances utilization, as it means that there will generally always be data units to transport over the link, but also increases queuing delay. On the other hand, if it is desired to reduce queuing delay, then the threshold at which the congestion notification procedure may set in should be lower, thereby making the data unit senders reduce their load on the network more frequently, and thereby reducing the average queuing delay. However, reducing the load also bears a higher risk of reducing the utilization, because the load might get reduced to a degree where there a re periods in which there are no data units to be transported, i.e. in which the link is under-utilized. The present invention therefore provides a queue control method and system that are flexible in the balancing of the trade-off between delay and utilization, by providing respective modes for each situation.

The setting of the first and second mode can be achieved in any desirable way. For example, the setting can be done manually by an operator, e.g. the operator sets a parameter that the control procedure uses to identify which mode is to be used. According to another example, the setting of modes can be done automatically. Preferably, the automatic setting takes into account the number of data unit loss indication events occurring outside of the transmission device in which the buffer being controlled is provided. Namely, in a preferred embodiment, an automatic mode setting procedure sets the threshold adaptation to the second mode (higher threshold) if the number of data units loss indication events exceeds a predetermined value. The exceeding of the predetermined value indicates that data unit losses are occurring, where these data unit losses will lead to the data unit senders reducing their load, such that the additional performance of congestion notifications (e.g. data unit dropping and/or data unit marking) could lead to an unnecessary further load decrease, which in the end would lead to link under-utilization.

Expressed differently, the embodiment just described assumes that the flow control performed at the sender and/or the receiver is such that the sender will reduce its load onto the network transporting the data units (i.e. send less data units) if it determines that a data unit loss has occurred. The purpose of congestion notifications given at the queue buffer being controlled is also to indicate to the sender to reduce the load on the network. As a consequence, the embodiment has the advantage of being able to adjust the issuing of congestion notifications in dependence on potential data losses outside of the data unit transmission device in which the buffer is provided. This makes it possible to avoid congestion notifications (data unit dropping and/or data unit marking) in cases where data unit losses are occurring anyhow, such that the congestion notifications could lead to the sender reducing its load more than necessary, which in turn could lead to an under-utilization of the link at which the queue buffer is provided. Under-utilization implies a state in which the link is idle, i.e. not transporting any data units. It is very desirable to avoid a link under-utilization, as an idle link is a waste of resources.

In accordance with another preferred embodiment, the method of controlling a queue buffer and the queue buffer controller are arranged in such a way that events which indicate a potential data unit loss in a flow that is being queued in the queue buffer are also taken into account for dynamically adapting the length threshold value within a given adaptation mode. In other words, after a given mode has been set (e.g. either manually or automatically, where the automatic setting may have been done on the basis of a measured number of loss indication events), which means that the threshold value is basically adapted on the basis of $n \cdot LC$ or $m \cdot LC$, where $LC$ represents the link capacity and $m>n$, a dynamic further adjustment can be performed in dependence on the measured number of loss indication events.

It is noted that loss indication events can be any event capable of implying a potential data loss. For example, such an event can be a missing data unit from a sequence of data units being queued (which implies a potential data loss upstream from the queuing buffer) or loss indication information contained in acknowledgment data units sent from the receiver of the queued flow to the sender of the queued flow. Such loss indication information can be explicit, e.g. an explicit notification of the flow receiver to the flow sender that a particular data unit of the sequence is missing, or implicit e.g. the sending of duplicate acknowledgments for the last data unit received correctly in the sequence.

The capability of the automatic threshold adaptation to be operated in the first mode or the second mode implies that a given queue in the buffer being controlled is operated in accordance with one of the modes. It is possible that the buffer holds a plurality of queues, each associated with one of the modes available (there may naturally be more than two operation modes available, e.g. a third mode in which the length threshold is adapted on the basis of $q \cdot LC$, where $q>m$). In other words, each queue has its respective length threshold value for comparing with a respective measured length parameter, and each length threshold is adapted individually. In such a situation, an embodiment is advantageous in which incoming data units that are to be queued, are discriminated into categories associated with the modes, and then placed into a queue operated in accordance with the discriminated mode. For example, the buffer controller can parse the data unit for specific information, e.g. a protocol identifier or port identifier in a header, and assign data units of a delay sensitive type (e.g. data units transporting segments from a Telnet application) to a queue operated in the mode for reducing delay, and assign data units of a throughput sensitive type (e.g. data units transporting segments from an ftp application) to a queue operated in the mode for maximizing utilization.

[Brief description of drawings]

Further aspects and details of the present invention will become apparent from the following detailed description and preferred embodiments, where reference will be made to the accompanying figures, in which:

Fig. 1 shows a schematic block diagram representation of a buffer and buffer controller according to the invention,

Fig. 2 shows a flowchart of a method embodiment of the present invention,

Fig. 3 shows a flowchart of another method embodiment of the present invention, and

Fig. 4 shows a flowchart of a basic method embodiment of the present invention.

[Detailed description of the embodiments]

Although some of the following embodiments may make reference to specific protocols, such as TCP/IP, the present invention can be applied to any system transporting data units in which a queue management scheme is used, where a congestion notification procedure is conducted in dependence on the event of a queue length parameter reaching a length threshold value. The present invention is not restricted to any specific such length threshold and congestion notification scheme, and is therefore e.g. applicable to any known RED scheme, to schemes that drop data units when a queue is full, such as tail-drop, random-drop or front-drop, and to any known scheme that performs explicit congestion notification instead of or in addition to data units dropping.

It is preferable to apply the method and device of the present invention in connection with the active queue management disclosed in EP-A-1249972.

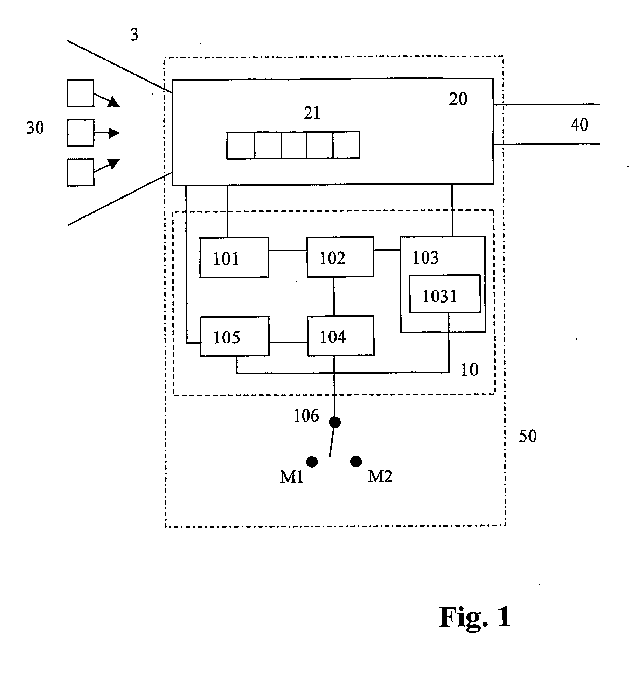

Fig. 1 shows a schematic representation of a queue buffer controller 10 that is capable of implementing the present invention for controlling the management of data units in a queue buffer 20. Reference numeral 3 represents a communication network over which data units 30 arrive at the queue buffer 20, in order to be placed in a queue 21 before being sent over link 40. Reference numeral 50 relates to the data unit transmission device in which the buffer 20 and controller 10 are provided. The data unit transmission device can e.g. be a router or server connected to communication network 3.

The data units 30 queued in queue 21 may belong to one or more flows. A flow is generically identified by a source and destination address, the source and destination Service Access Point (SAP) identifier and a protocol identifier. The definition and concept of a flow is well known in the art, e.g. from TCP/IP, in which case the source and destination address are called IP addresses and the SAP identifier is a port address, such that a further explanation is not necessary here.

Now specific elements will be described for embodying the concept of the present invention in queue buffer controller 10. It is noted that a queue buffer controller will generally comprise more than these elements, namely known elements for processing received data units and managing the buffer, which are not explicitly described for the sake of simplicity. Especially, the controller 10 may have additional elements for specifically embodying a system as described in EP-A-1 249 972.

Reference numeral 101 describes a queue length determinator for determining a value of a length parameter related to the length of queue 21. Furthermore, a comparator 102 is provided for comparing the determined length value with a length threshold value Lth provided by a threshold adaptor 104, which is arranged to automatically adapt the length threshold values by estimating a link capacity value LC based on the data rate DR of link 40. The comparator 102 is connected to a congestion notifier 103 that performs a congestion notification procedure if the determined length value is greater than the length threshold value. As shall be explained in more detail further on, the length parameter to be determined can be chosen in any suitable or desirable way, e.g. be the absolute length queue length QL or an average queue length QLav , and the congestion notification procedure can equally be chosen as is suitable or desirable, e.g. be a data unit dropping procedure and/or an explicit data unit marking procedure.

The congestion notifier 103 preferably comprises a decision unit 1031 for deciding whether or not to perform a congestion notification with respect to one or more data units in queue 21. In other words, the congestion notifier 103 is arranged in such a way that it does not necessarily perform a congestion notification if the queue length parameter exceeds the length threshold value. This is basically known in the art, e.g. from RED or some systems described in EP-A-1 249 972, where the length threshold value is a first or lower threshold, and a second or higher length threshold is also provided, where if the queue length parameter exceeds the first threshold but does not exceed the second, a probability based decision is made for performing a congestion notification with respect to one or more data units.

In accordance with the present invention, the threshold adaptor 104 is operable in one of at least two adaptation modes. The first adaptation mode is associated with minimizing queuing delay and adapts the length threshold value Lth on the basis of $n \cdot LC$, where $n \geq 1$. For example, n can be 1 and the first adaptation mode sets Lth = LC or Lth = LC + $\Delta 1$, where $\Delta 1$ is a positive factor smaller than LC, e.g. $0 < \Delta 1 \leq LC/10$. The second adaptation mode is associated with maximizing utilization and adapts the length threshold value Lth on the basis if $m \cdot LC$, where m>1 and m>n. For example, m can be 3 and the second adaptation mode sets Lth = $3 \cdot LC$ or Lth = $3 \cdot LC - \Delta 2$, where $\Delta 2$ is a positive factor smaller than LC, e.g. $0 < \Delta 2 \leq LC/10$. If the feature of dynamic adaptation with respect to ambient events (such as loss indication events) after mode setting is provided, then the above settings are initial and may be varied thereafter in accordance with the occurrence of such events. If no dynamic adaptation feature is provided, then the value of Lth will remain as set above, but it is to be noted that the value of LC is generally not static, i.e. LC will vary over time, and this leads to the possibility of the value of Lth changing accordingly.

The factors n and m can be arbitrary positive numbers, but are preferably positive natural numbers.

The setting of the first mode or second mode can be done in any suitable or desirable way. For example, it can be done manually by an operator with the help of an appropriate mechanism, symbolized by switch 106 in Fig. 1, which can be set to the first mode M1 or the second mode M2. Element 106 may be a real switch, but is preferably a software element with which a user may set the threshold adaptor into a desired mode.

The link capacity value can be understood as the minimal amount of data that the sender of a flow under consideration must send out, such that the bandwidth that link 40 allocates to said flow is fully used. Full utilization means that the proportion of link bandwidth allocated to the given flow is always in full use. Expressed somewhat differently, if one considers the simplified example of link 40 only serving a single flow, then this means that the sender of that flow sends so much data that link 40 is constantly busy, i.e. constantly sending data units, without any idle time in between. Again in other words, the link capacity is the amount of data that the sender brings into flight, such that any additional data brought into flight will not increase throughput, as the additional data is queued.

The link capacity can therefore also be understood as the product of the data rate provided by the link 40 to the flow in question, multiplied by the round trip time (RTT) associated with said flow for the case of an unloaded network. An unloaded network means that there is no queuing delay. As a consequence, the value of the unloaded RTT is equal to the difference between the actual RTT of the flow and all queuing delays for said flow. The link capacity is sometimes also referred to as the pipe capacity of a hypothetical pipe between the flow end points, said pipe having a "width" DR and a "length" equal to the unloaded RTT.

The estimation of the link capacity value will therefore generally consist in determining a time value indicative of the unloaded RTT, and multiplying this value with the data rate DR provided by link 40 for a flow in question. The determination of this unloaded RTT can be done in any suitable or desirable way. One example is to calculate the sum of a constant RTTwc and the RTT provided by link 40. RTTwc is a worst-case estimation of the overall unloaded RTT excluding the contribution from the link 40, and may have a value of 150 to 300 ms, more preferably 150 to 250 ms. Using this concept has the advantage that no flow specific information needs to be obtained.

An alternative possibility of estimating the unloaded RTT for a given flow consists in calculating the queuing delay at buffer 20, e.g. by keeping an average of the amount of time that a buffered data unit 30 spends in queue 21, and calculating the difference between the actual RTT of the flow and this queuing delay. The value of the actual RTT for the flow can e.g. be inserted into the data units of said flow by the sender and read by controller 10.

It is noted that the estimate LC of the link capacity will generally not be identical to the actual momentary link capacity. The process of estimating the link capacity is preferably such that the estimated value exceeds the real link capacity, i.e. the estimate is conservative. This can be achieved in any suitable or desirable way, e.g. by using the above mentioned worst case estimates for the unloaded RTT, and/or by adding predetermined positive factors to one or more of the parameters used in estimating the link capacity. In other words, one can add a predetermined factor to the unloaded RTT and/or to the RTT of the link and/or to DR, and one can add a predetermined positive factor $\varepsilon$ to the calculation result, i.e. replacing the calculated value of LC by LC + $\varepsilon$ : LC ←LC + $\varepsilon$.

The choice of parameters n and m for the first and second mode is preferably done in accordance with the reaction that a data unit sender will show when receiving a congestion notification. If the sender is of a type that reduces its load on the network by a factor k, e.g. divides its send window by k if window-based flow control is used, then n is preferably chosen to be k-1 and m is preferably chosen to be $k^2$-1. The reason will be explained in the following.

As already mentioned above, the estimated link capacity LC is such that once more data units are in flight than this value, queuing begins. As a consequence, when the length threshold value Lth is reached, the amount of data in flight is LC + Lth. As a consequence, when congestion notifications are started, a window-based sender will have a send window equal to LC + Lth.

As a condition for setting Lth in a mode that serves to minimize queuing delay, it is desired to achieve a fair balance between holding the average queue length short and keeping the link busy, i.e. it is desired to make the queue length as short as possible without causing under-utilization. This leads to the consideration that upon onset of congestion notification, i.e. when the send window of Lth+LC is divided by k, the resulting window size be equal to LC, as this means that the load is sufficient to keep the link busy: $\dfrac{L_{th} + LC}{k} = LC$ , which leads to Lth=LC·(k-1).

As a condition for setting Lth in a mode that serves to maximize utilization, it is considered that besides the performance of congestion notifications for reducing the load a sender places on the network, data loss indication events occur, which also lead to the sender reducing its load. Then the following worst case assumption is made: after a first reduction of the send window by k, a data loss event (not an intentional data drop in the context of congestion notification) occurs, provoking a further reduction by k. In such a scenario that implies the occurrence of data losses outside of the transmission device in which the buffer under control is located, this leads to the condition: $\dfrac{L_{th} + LC}{k^2} = LC$, which in turn leads to Lth=LC·(k²-1).

In TCP/IP k=2, i.e. a sender reduces the send window to one half when receiving a congestion notification or determining a data unit loss indication event. As a consequence, if the buffer being controlled is used to queue TCP segments, then n is preferably 1 and m is preferably 3.

In accordance with a preferred embodiment of the present invention, a loss indication event detector 105 is additionally provided. The detector 105 is arranged for detecting an event outside of said data unit transmission device 50, which event indicates a potential data unit loss in a flow queued in queue 21.

In the example of Fig. 1, the loss indication event detector 105 is connected to both the threshold adapter 104 and the decision unit 1031, such that both can take detected loss indication events or signals derived therefrom into account. However, it is also within the scope of the present embodiment that only the threshold adapter 104 take the results of the loss indication event detector 105 into account, or that only the decision unit 1031 take the results of the loss indication event detector 105 into account.

Further details of procedures conducted by the above described elements will be described later in connection with the method examples of the invention that can be embodied in the buffer controller of Fig. 1.

It is noted that the above-described elements 101-105 can be provided as hardware, software or any suitable combination of hardware and software. Preferably, the controller 10 is a programmable data processor, and the elements 101 to 105 are software elements, e.g. program code parts.

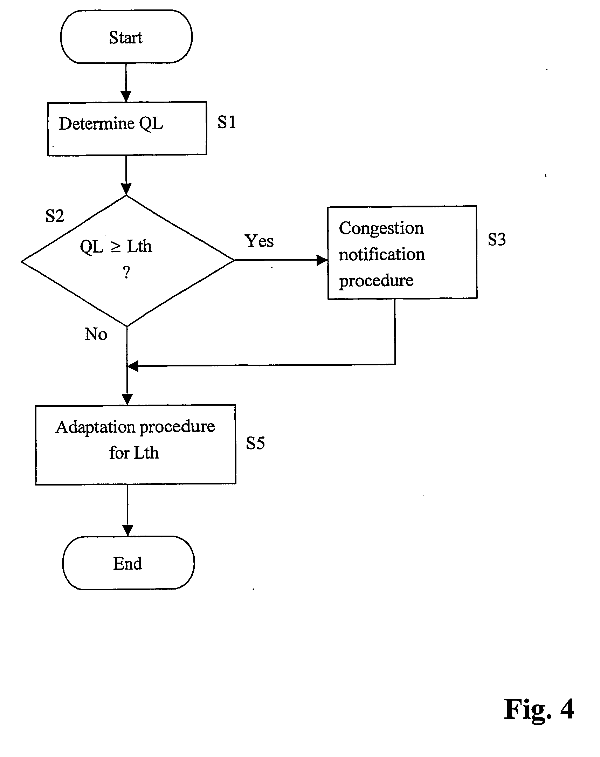

Fig. 4 shows a flow chart of a basic embodiment of the method of the present invention, which method can be performed with the controller 10 shown in Fig. 1. In first step S1, a value of a length parameter related to the length of the queue 21 is determined. This queue length related parameter can be related to the queue length in any desirable or suitable way, e.g. can be the actual or momentary queue length QL, or a parameter derived from the actual or momentary queue length, such as an average value QLav.

In the example of Fig. 4, the queue length related parameter is the actual queue length QL. If it is desirable to use an average queue length QLav, this average value can be determined in accordance with any known suitable averaging algorithm, and such an algorithm may typically consist in updating an old average value by calculating the sum of the old average multiplied by a first weight factor and the momentary queue length multiplied by a second weight factor. For example, QLav can be calculated as

$$\text{QLav (new)} = \text{QLav (old)} \times (1 - 1/2^{\text{wf}}) + (\text{QL} \times 1/2^{\text{wf}})$$

where QL represents the momentary queue length value and wf is an exponential weight factor adjustable between 0 and 1.

Returning to Fig. 4, in step S2 the queue length parameter QL is compared with a length threshold value Lth. If the length threshold value Lth is exceeded, then a congestion notification procedure S3 is performed, otherwise the congestion notification procedure S3 is skipped.

As already mentioned above, the congestion notification procedure can be chosen in any suitable or desirable way. For example, it can comprise dropping/marking one or more predetermined or randomly selected data units from the queue 21, or dropping/marking one or more newly arrived data units before placing them into queue 21.

The congestion notification procedure may also comprise a decision procedure for deciding whether or not to actually perform a congestion notification with respect to one or more of the data units from queue 21. As already mentioned above, such a decision procedure can e.g. depend on a probability function, as is known in the prior art.

In the example of Fig. 4, the control procedure then continues to step S5, in which the automatic threshold adaptation procedure is conducted. As already specified above, the automatic threshold adaptation procedure S5 is operable in one of at least a first and a second adaptation mode, the first adaptation mode being associated with minimizing queuing delay and adapting the length threshold value Lth on the basis of n·LC, where n=1, and the second adaptation mode being associated with maximizing utilization and adapting the length threshold value Lth on the basis of m·LC, where m>1 and m>n.

The mode in which S5 operates can be set manually by an operator, or can be set automatically by a routine dedicated to this task. An example for such a routine will now be described.

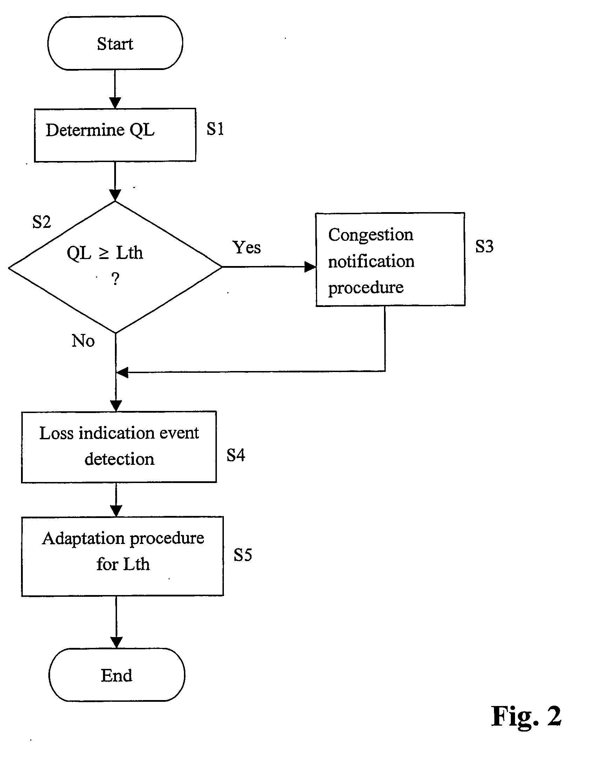

Fig. 2 shows a method embodiment that comprises all of the steps of the embodiment of Fig. 4, such that a repeated description is not necessary, and where a loss indication event detection procedure S4 is added after steps S2, S3. This loss indication event detection procedure S4 is capable of detecting events that indicate a potential data unit loss in one or more of the flows queued in queue 21, where this potential data unit loss occurs outside of data unit transmission device 15. For example, the loss indication event detection procedure S4 can comprise monitoring sequence identifiers of data units of a queued flow, where the missing of a data unit from the sequence indicates a potential data unit loss. Alternatively or additionally, the loss indication event detection procedure may comprise monitoring loss indication information in acknowledgment data units sent from the flow receiver to the flow sender, where this loss indication information can be explicit or implicit.

In accordance with the example of Fig. 2, the automatic threshold adaptation procedure S5 takes into account results provided by the loss indication event detection procedure S4, in order to automatically set the first or second adaptation mode. For example, the loss indication event detection procedure S4 can output a count value indicative of the number of such loss indication events (which will be explained in more detail further on), and if this count value exceeds a predetermined value then the adaptation procedure is set to operate in the second mode (utilization optimisation), otherwise it is set in the first mode (delay optimisation).

Beyond using the outcome of the loss indication event detection procedure for automatically setting the adaptation mode, it is additionally or alternatively also possible to use the outcome of the loss indication event detection procedure for dynamically adapting the threshold value Lth in the first or second mode. In other words, after a given mode has been set (e.g. either manually or automatically, where the automatic setting may have been done on the basis of a measured number of loss indication events), which means that the threshold value is basically adapted on the basis of $n \times LC$ or $mxLC$, a dynamic further adjustment can be performed in dependence on the measured number of loss indication events.

For example, if the loss indication event detection procedure indicates a certain amount of potential data units losses outside of the transmission device 50, then the threshold Lth used for triggering the congestion notification procedure can be increased beyond the value that it was set to in the given mode. For example, it can be increased beyond the estimated link capacity value LC, which could be an initial choice for Lth in the first mode. The increase will be only a fraction of LC, e.g. up to one tenth of LC, as a sort of "fine tuning" within a given mode.

The increasing of the threshold value Lth has the effect of making it less probable that the queue length parameter QL will reach the threshold Lth in step S2, such that it is less probable that a congestion notification will be performed.

Thereby, it can be avoided that congestion notifications are performed although the flow sender is already reducing the load onto the network due to data unit losses that occur independently of the congestion notification procedure. Data unit losses outside of the transmission unit 50 together with congestion notifications from the transmission unit 50 could lead to the flow sender reducing its load onto the network too much, which in turn could lead to an under-utilization of link 40.

Attention is drawn to the fact that the specific arrangement of steps shown in Fig. 2 and 4 is only an example. Especially, steps S1, S2 and S3, which together form a procedure for deciding on the triggering of a congestion notification procedure, are independent of the adaptation procedure embodied by step S5. Consequently, steps S1-S3 may be arranged independently of S5. Equally, step S4 can be arranged independently of S1-S3 and S5, e.g. as a procedure that runs in parallel to the others and/or is selectively invoked as a sub-routine.

Regarding the examples of Fig. 2 and 4, it is also noted that all of the shown steps will generally be contained in a larger method of controlling or managing the queue buffer 20, which larger method has more steps and procedures, but where these additional steps and procedures are not shown as they do not pertain to the present invention. The methods of Fig. 2 and 4, just as all method embodiments of the invention, may be implemented as software, where steps S1-S3 can e.g. be implemented in one thread, while S5 can be implemented in another independent thread. Step S4 can be implemented in yet another independent thread.

In the example of Fig. 2 the adaptation procedure for Lth in step S5 can take the outcome of the loss indication event detection procedure S4 into account in any desired or suitable way. In general, the threshold adaptation procedure will be arranged in such a way that the length threshold Lth will be increased with increasing occurrence of potential data losses outside of the data unit transmission device 50, in order to make the triggering of the congestion notification procedure S3 less likely, as explained above.

In accordance with a preferred embodiment, the method of loss event detection is arranged in such a way that a counting procedure is provided for counting the number of data unit loss indication events occurring outside of transmission device 50 in the queued flow under consideration, and a procedure is provided for deriving a characteristic count value from that counted numbers. The automatic threshold adaptation procedure then comprises a step for setting the adaptation mode and/or fine tuning the length threshold value Lth in dependence on this characteristic count value.

The process of deriving a characteristic count value can be chosen in any suitable or desirable way. For example, it may comprise determining the number of loss indication events occurring outside of data unit transmission device 50 in the queued flow under consideration in each of p respective predetermined time intervals, where p is a natural number, and then selecting a maximum among that numbers as the characteristic count value. If p is 1, then this means simply counting the number of loss indication events within a predetermined interval, and outputting the count value for each consecutive interval. In order to make the characteristic count value less susceptible to short-time fluctuations, it is preferable to choose p larger than 1, e.g. p = 5. In this case the procedure holds the counted number of loss indication events in the five latest intervals, and outputs the maximum among the loss indication events of the latest five intervals as the characteristic count value.

The predetermined interval or intervals during which the number of loss indication events are counted can be chosen in any suitable or desirable way, e.g. have a predetermined fixed length. Preferably, they are defined dynamically as the time between two consecutive decisions of performing congestion notification for one or more data units by the decision procedure contained in the congestion notification procedure. In other words, once the decision procedure in the congestion notification procedure decides to perform a congestion notification, a new interval is started and consequently a new count of loss indication events begins. This count of loss indication events is continued until the next performance of a congestion notification.

Another possibility of deriving a characteristic count value consists in determining an average number of loss indication events occurring outside of the transmission device 50. Such an averaging can be conducted by monitoring the number of loss indication events in consecutive predetermined intervals, just like in the example described above, and then averaging the thus counted numbers over the number of intervals. Such an averaging operation is preferably conducted as a running average, e.g.

$$AV(new) = AV(old) \times (1-q) + Num \times q,$$

where AV represents the average value, q is a weighting factor $0<q<1$, and Num is the number of loss indication events in the latest complete interval.

As already mentioned in general, the length threshold adaptation procedure S5 will increase the length threshold value Lth if the characteristic count value indicates an increase in loss indication events.

Regarding the counting of loss indication events, it is noted that the choice of what is counted as a loss indication event can be performed in any suitable or desirable way. For example, if the loss indication event detection procedure comprises monitoring the sequence identifiers of data units in the flow under consideration, then each detection of a missing data unit in the sequence ("a gap" in the sequence) can be counted as a loss indication event. This process can also be modified in that the recognition of such a gap is not immediately counted as a loss indication event, but that the procedure first waits for a predetermined wait period, and a loss indication event is only counted if the missing data unit does not appear within the wait period. The introduction of such a wait period makes the procedure more resistant against reordering of data units over the transmission path in network 3.

As another example, if the loss indication event detection procedure comprises monitoring loss indication information in acknowledgment data units, then e.g. each occurrence of a loss indication information can be counted as a loss indication event. Taking TCP/IP as an example, a loss indication event can be the occurrence of a duplicate acknowledgment. As such, each occurrence of a duplicate acknowledgment can be counted as a loss indication event. However, when monitoring acknowledgment data units for loss indication information, is preferable to have the buffer controller operate in the same way as the data unit sender with respect to the identification of data unit loss events. In other words, the buffer controller should apply the same criteria for judging a data unit loss event as the data unit sender for the purpose of flow control. For example, in TCP/IP a data unit sender will judge that a data unit loss has occurred after having received a predetermined number (e.g. 3) of duplicate acknowledgments. In this case, it is preferable that the buffer controller also counts the duplicate acknowledgments, and judges a data unit loss event to have occurred in the predetermined number of duplicate acknowledgments has been counted.

If the congestion notification performed by the buffer controller are data unit drops, then the controller should preferably be arranged to record these drops in association with the sequence number of the dropped data unit, in order to be able to identify those acknowledgment messages that relate to said dropped data unit, and to not count such loss indication information as an event that indicates a data loss outside of the transmitting device 50.

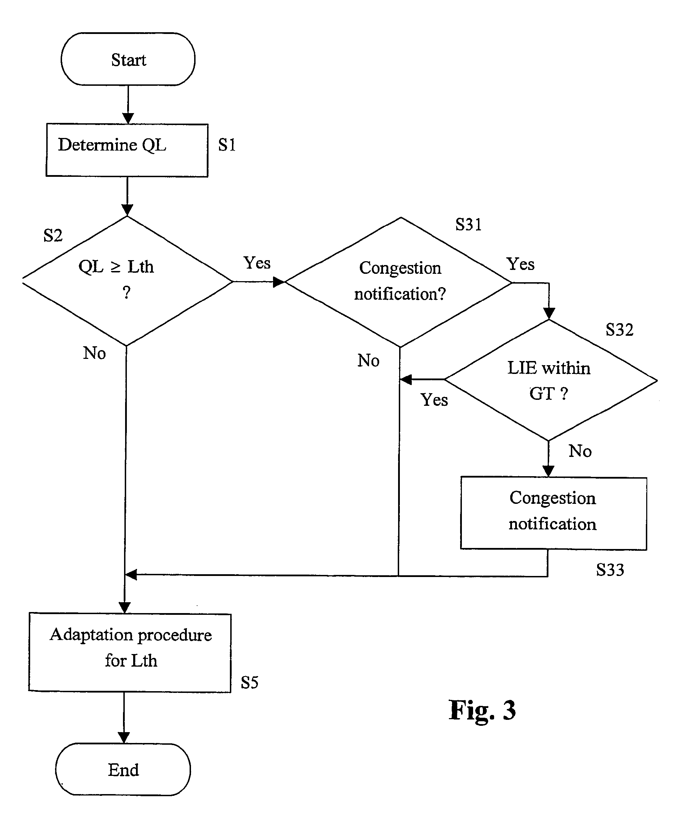

Now a further embodiment of the present invention will be described with reference to Fig. 3. Steps S1 and S2 are identical to what has already been described in connection with Fig. 2 and 4, such that a repeated description is not necessary. However, in the example of Fig. 3, the congestion notification procedure S3 consists of steps S31, S32 and S33, which are different from the example of Fig. 2 or 4. Step S31 represents a decision procedure for deciding whether to perform a congestion notification with respect to one or more data units. For example, this can be the above mentioned example of examining a probability function. If the outcome of this decision procedure is affirmative, then step S32 is conducted, i.e. a procedure for determining whether an event indicating a potential data unit loss outside of the data transmission device 50 has occurred for the flow under consideration, and if such an event has occurred, the decision of performing a congestion notification in step S31 is cancelled. In other words, in this case no congestion notification is performed.

In the specific example of Fig. 3, step S32 consists in determining whether a loss indication event occurs within a predetermined guard time GT after it is detected that the value of the length parameter QL has exceeded the length threshold value Lth.

In other words, after the detection of QL exceeding Lth, it is monitored whether a loss indication event LIE occurs within the guard time GT or not. If a loss indication event occurs, then the congestion notification decided in step S31 is cancelled or disabled, i.e. not performed, because it is assumed that the flow sender will reduce its load into the network based upon the indicated data unit loss outside of the transmission device 50, such that the performance of the congestion notification could lead to an excessive reduction of sent data units on the part of the flow sender, thereby possibly leading to an under-utilization of link 40.

On the other hand, if within the procedure of step S32 no loss indication event is detected within the guard time GT, the congestion notification decided in step S31 is performed in step S33.

In the above example of Fig. 3, the decision procedure, which consists of steps S31, S32 and S33 takes the loss indication event detection outcome into account. In the example of Fig. 2, it was the automatic threshold adaptation procedure S5 that took the loss indication event detection outcome into account. It is noted that these two possibilities of making use of the loss indication event detection outcome can also be combined, i.e. that both the automatic threshold adaptation procedure and the decision procedure take the outcome of the loss indication event detection into account.

Now a further embodiment will be described. The capability of the automatic threshold adaptation S5 or threshold adaptor 104 to be operated in the first mode or the second mode implies that a given queue in the buffer being controlled is operated in accordance with one of the modes. It is possible that the buffer holds a plurality of queues, each associated with one of the modes available. There may naturally be more than two operation modes available, e.g. a third mode in which the length threshold is adapted on the basis of sxLC, where s>m. In other words, each queue has its respective length threshold value for comparing with a respective measured length parameter, and each length threshold is adapted individually. In such a situation, an embodiment is proposed in which incoming data units that are to be queued, are discriminated into categories associated with the modes, and then placed into a queue operated in accordance with the discriminated mode. For example, the buffer controller can parse the data unit for specific information, e.g. a protocol identifier or port identifier in a header, and assign data units of a delay sensitive type (e.g. data units transporting segments from a Telnet application) to a queue operated in the mode for reducing delay, and assign data units of a throughput sensitive type (e.g. data units transporting segments from an ftp application) to a queue operated in the mode for maximizing utilization.

Although the present invention has been described by way of specific examples, these are not intended to be limiting, as the scope of the invention is defined by the appended claims. Reference signs in the claims only serve to make the claims easier to read and are also not intended to have any limiting effect.

**Claims**

1. A method of controlling a queue buffer (20) in a data unit transmission device (50), said queue buffer being arranged to queue data units (30) in a queue (21) and being connected to a link (40), comprising
   determining (S1) a value (QL) of a length parameter related to the length of said queue,
   comparing (S2) said value (QL) with a length threshold value (Lth) and performing (S3) a congestion notification procedure with respect to one or more data units from said queue if said value (QL) is greater than said length threshold value (Lth), and
   an automatic threshold adaptation procedure (S5) that comprises estimating a link capacity value based on the data rate of said link (40) and adapting said threshold value (Lth) on the basis of said estimated link capacity value,
   **characterized in that**
   said automatic threshold adaptation procedure (S5) is operable in one of at least a first and a second adaptation mode, said first adaptation mode being associated with minimizing queuing delay and adapting said threshold value (Lth) on the basis of $n \cdot LC$, where LC represents the estimated link capacity value and $n \geq 1$, and said second adaptation mode being associated with maximizing utilization and adapting said threshold value (Lth) on the basis of $m \cdot LC$, where m>1 and m>n.

2. The method of claim 1, said queue buffer being arranged for receiving data units from a sender that performs window-based flow control and divides its send window by k, k>1, when receiving a congestion notification or when detecting data unit loss, wherein n=k-1 and $m=k^2-1$.

3. The method of claim 2, wherein k=2, n=1 and m=3.

4. The method of one of claims 1 to 3, wherein a setting of said first mode or said second mode is done manually by an operator.

5. The method of one of claims 1 to 3, comprising an automatic mode setting procedure for setting said first mode or said second mode automatically.

6. The method of one of claims 1 to 5, comprising a loss indication event detection procedure for detecting potential data unit losses outside of said data unit transmission device (50) in a flow queued in said queue buffer.

7. The method of claim 6, wherein said loss indication event detection procedure comprises monitoring sequence identifiers of data units in said queued flow.

8. The method of claim 6 or 7, wherein said loss indication event detection procedure comprises monitoring loss indication information in acknowledgement data units sent from a receiver of said queued flow to the sender of said queued flow.

9. The method of one of claims 6 to 8, where said loss indication event detection procedure comprises:

a counting procedure for counting a number of data unit loss indication events occurring outside of said data unit transmission device in said queued flow, and
a procedure for deriving a characteristic count value from said counted numbers.

10. The method of claim 9, wherein said procedure for deriving a characteristic count value determines the number of loss indication events occurring outside of said data unit transmission device in said queued flow in each of $p$ respective predetermined intervals, $p$ being a natural number, and selects a maximum among said numbers as said characteristic count value.

11. The method of claim 10, wherein said predetermined intervals are defined as the time between two consecutive decisions of performing a congestion notification for a data unit in said queued flow.

12. The method of claim 9, wherein said procedure for deriving a characteristic count value determines an average number of loss indication events occurring outside of said data unit transmission device in said queued flow as said characteristic count value.

13. The method of one of claims 6 to 12 as depending on claim 5, wherein said automatic mode setting procedure takes an outcome of said loss indication event detection procedure into account.

14. The method of one of claims 6 to 13, where said automatic threshold adaptation procedure takes an outcome of said loss indication event detection procedure into account for dynamically adapting said threshold value (Lth) in said first or said second adaptation mode.

15. The method of one of claims 6 to 14, wherein said congestion notification procedure comprises a decision step for deciding whether to perform a congestion notification procedure with respect to one or more data units, which decision step depends on the outcome of said loss indication event detection procedure.

16. The method of claim 15, comprising monitoring whether an event that indicates a potential data unit loss in a queued flow occurs within a predetermined period of time after it is detected that said value of said length parameter (QL) related to the length of said queue is greater than said length threshold value (Lth), and said decision step comprises not performing a congestion notification if an event indicating a potential data unit loss occurs within said predetermined period of time, and otherwise performing said congestion notification.

17. The method of one of claims 1 to 16, wherein said queue buffer is arranged to hold at least a first queue and a second queue, said automatic threshold adaptation procedure adapting a first threshold value associated with said first queue in accordance with said first adaptation mode and adapting a second threshold value associated with said second queue in accordance with said second adaptation mode.

18. The method of claim 17, comprising a discrimination and placing procedure for discriminating data units to be queued on the basis of their contents and placing data units into said first or said second queue in dependence on a discrimination result.

**19.** A queue buffer controller (10) for controlling a queue buffer (20) in a data unit transmission device (50), said queue buffer (20) being arranged to queue data units (30) in a queue (21) and being connected to a link (40), comprising a queue length determinator (101) for determining a value of a length parameter (QL) related to the length of said queue (21),
a comparator (102) for comparing said value with a length threshold value (Lth),
a congestion notifier (103) for performing a congestion notification procedure if said value is greater than said length threshold value, and
a threshold adaptor (104) for automatically adapting said length threshold value (Lth) by estimating a link capacity value based on the data rate of said link (40) and adapting said length threshold value (Lth) on the basis of said estimated link capacity value,
**characterized in that**
said threshold adaptor (104) is operable in one of at least a first and a second adaptation mode, said first adaptation mode being associated with minimizing queuing delay and adapting said threshold value (Lth) on the basis of $n \cdot LC$, where LC represents the estimated link capacity value and $n \geq 1$, and said second adaptation mode being associated with maximizing utilization and adapting said threshold value (Lth) on the basis of $m \cdot LC$, where $m > 1$ and $m > n$.

**20.** The queue buffer controller of claim 19, said queue buffer being arranged for receiving data units from a sender that performs window-based flow control and divides its send window by k, $k > 1$, when receiving a congestion notification or when detecting data unit loss, said threshold adaptor (104) being arranged such that $n = k-1$ and $m = k^2 - 1$.

**21.** The queue buffer controller of claim 20, wherein $k = 2$, $n = 1$ and $m = 3$.

**22.** The queue buffer controller of one of claims 19 to 21, comprising a setting mechanism for the manual setting of said first mode or said second mode by an operator.

**23.** The queue buffer controller of one of claims 19 to 22, comprising an automatic mode setting mechanism for setting said first mode or said second mode automatically.

**24.** The queue buffer controller of one of claims 19 to 23, comprising a loss indication event detector (105) for detecting potential data unit losses outside of said data unit transmission device (50) in a flow queued in said queue buffer.

**25.** The queue buffer controller of claim 24, wherein said loss indication event detector (105) comprises a monitor for monitoring sequence identifiers of data units in said queued flow.

**26.** The queue buffer controller of claim 24 or 25, wherein said loss indication event detector (105) comprises a monitor for monitoring loss indication information in acknowledgement data units sent from a receiver of said queued flow to the sender of said queued flow.

**27.** The queue buffer controller of one of claims 24 to 26, comprising:

a counter for counting a number of data unit loss indication events occurring outside of said data unit transmission device in said queued flow, and
a count number processor for deriving a characteristic count value from said counted numbers.

**28.** The queue buffer controller of claim 27, wherein said count number processor is arranged for determining the number of loss indication events occurring outside of said data unit transmission device in said queued flow in each of p respective predetermined intervals, p being a natural number, and selecting a maximum among said numbers as said characteristic count value.

**29.** The queue buffer controller of claim 28, wherein said predetermined intervals are defined as the time between two consecutive decisions of performing a congestion notification for a data unit in said queued flow.

**30.** The queue buffer controller of claim 27, wherein said count number processor is arranged for determining an average number of loss indication events occurring outside of said data unit transmission device in said queued flow as said characteristic count value.

**31.** The queue buffer controller of one of claims 24 to 30 as depending on claim 23, wherein said automatic mode setting mechanism is arranged for taking an output of said loss indication event detector into account.

**32.** The queue buffer controller of one of claims 24 to 31, where said threshold adaptor (104) is arranged for taking an output of said loss indication event detection procedure into account for dynamically adapting said threshold value (Lth) in said first or said second adaptation mode.

**33.** The queue buffer controller of one of claims 24 to 32,
wherein said congestion notifier (103) comprises a decision unit (1031) for deciding whether to perform a congestion notification with respect to one or more data units, which decision unit (1031) is arranged for taking into account an output of said loss indication event detector (105).

**34.** The queue buffer controller of claim 33, wherein said loss indication event detector (105) is arranged for monitoring whether an event that indicates a potential data unit loss in a queued flow occurs within a predetermined period of time after it is detected that said value of said length parameter (QL) related to the length of said queue is greater than said length threshold value (Lth), and said decision unit (1031) is arranged to not perform a congestion notification if an event indicating a potential data unit loss occurs within said predetermined period of time, and to otherwise perform said congestion notification.

**35.** The queue buffer controller of one of claims 19 to 34, wherein said queue buffer is arranged to hold at least a first queue and a second queue, said threshold adaptor is arrange for adapting a first threshold value associated with said first queue in accordance with said first adaptation mode and adapting a second threshold value associated with said second queue in accordance with said second adaptation mode.

**36.** The queue buffer controller of claim 35, comprising a discrimination and placing unit for discriminating data units to be queued on the basis of their contents and placing data units into said first or said second queue in dependence on a discrimination result.

## Patentansprüche

**1.** Verfahren zur Steuerung eines Warteschlangenpuffers (20) in einer Dateneinheitsübertragungsvorrichtung (50), wobei der Warteschlangenpuffer so ausgelegt ist, dass er Dateneinheiten (30) in eine Warteschlange (21) einreiht, und mit einem Übertragungsabschnitt (40) verbunden ist, umfassend:

Bestimmen (S1) eines Wertes (QL) eines Längenparameters, der mit einer Länge der Warteschlange assoziiert ist,
Vergleichen (S2) des Wertes (QL) mit einem Längenschwellenwert (Lth) und Durchführen (S3) einer Überlastmeldungsprozedur in Bezug auf eine oder mehrere Dateneinheiten aus der Warteschlange, wenn der Wert (QL) größer als der Längenschwellenwert (Lth) ist, und
einer automatischen Schwellenwertanpassungsprozedur (S5), die ein Bestimmen eines Wertes der Übertragungsabschnittskapazität basierend auf der Datenrate der Übertragungsabschnitt (40) und Anpassen des Schwellenwerts (Lth) basierend auf dem bestimmten Wert der Übertragungsabschnittkapazität umfasst,
**dadurch gekennzeichnet, dass**
die automatische Schwellenwertanpassungsprozedur (S5) in einem von mindestens einem ersten und einem zweiten Anpassungsmodus durchführbar ist, wobei der erste Anpassungsmodus mit einem Minimieren von Verzögerung des Warteschlangenbetriebs und Anpassen des Schwellenwerts (Lth) auf der Basis von n·LC verbunden ist, wobei LC den bestimmten Wert der Übertragungsabschnittskapazität darstellt und $n \geq 1$, und der zweite Anpassungsmodus mit einem Maximieren von Nutzung und Anpassen des Schwellenwerts (Lth) auf der Basis von m·LC verbunden ist, wobei $m > 1$ und $m > n$.

**2.** Verfahren nach Anspruch 1, wobei der Warteschlangenpuffer zum Empfangen von Dateneinheiten von einem Sender ausgelegt ist, der eine fensterbasierte Flusssteuerung durchführt und sein Sendefenster durch k teilt, wobei $k > 1$, wenn er eine Überlastmeldung empfängt oder wenn er einen Dateneinheitsverlust detektiert, wobei $n = k - 1$ und $m = k^2 - 1$.

**3.** Verfahren nach Anspruch 2, wobei $k = 2$, $n = 1$ und $m = 3$.

**4.** Verfahren nach einem der Ansprüche 1 bis 3, wobei ein Einstellen des ersten Modus oder des zweiten Modus manuell durch einen Operator erfolgt.

**5.** Verfahren nach einem der Ansprüche 1 bis 3, umfassend eine automatische Moduseinstellprozedur zum automatischen Einstellen des ersten Modus oder des zweiten Modus.

**6.** Verfahren nach einem der Ansprüche 1 bis 5, umfassend eine Verlustanzeigeereignis-Detektionsprozedur zum Detektieren von potenziellen Dateneinheitsverlusten außerhalb der Dateneinheitsübertragungsvorrichtung (50) in einem Fluss, der im Warteschlangenpuffer in eine Warteschlange eingereiht ist.

**7.** Verfahren nach Anspruch 6, wobei die Verlustanzeigeerreignis-Detektionsprozedur ein Überwachen von Reihenfolgekennungen von Dateneinheiten in dem in die Warteschlange eingereihten Fluss umfasst.

**8.** Verfahren nach Anspruch 6 oder 7, wobei die Verlustanzeigeereignis-Detektionsprozedur ein Überwachen von Verlustanzeigeinformationen in Bestätigungsdateneinheiten umfasst, die von einem Empfänger des in die Warteschlange eingereihten Flusses an den Sender des in die Warteschlange eingereihten Flusses gesendet werden.

**9.** Verfahren nach einem der Ansprüche 6 bis 8, wobei die Verlustanzeigeereignis-Detektionsprozedur umfasst:

eine Zählprozedur zum Zählen einer Anzahl von Dateneinheitsverlustanzeigeereignissen, die außerhalb der Dateneinheitsübertragungseinheit in dem in die Warteschlange eingereihten Fluss eintreten, und
eine Prozedur zum Ableiten eines charakteristischen Zählwerts aus den gezählten Anzahlen.

**10.** Verfahren nach Anspruch 9, wobei die Prozedur zum Ableiten eines charakteristischen Zählwerts die Anzahl von Verlustanzeigeereignissen, die außerhalb der Dateneinheitsübertragungsvorrichtung in dem in die Warteschlange eingereihten Fluss eintreten, in jedem von p jeweiligen vorbestimmten Intervallen bestimmt, wobei p eine natürliche Zahl ist, und ein Maximum unter den Anzahlen als den charakteristischen Zählwert auswählt.

**11.** Verfahren nach Anspruch 10, wobei die vorbestimmten Intervalle als die Zeit zwischen zwei aufeinander folgenden Entscheidungen des Durchführens einer Überlastmeldung für eine Dateneinheit in dem in die Warteschlange eingereihten Fluss definiert sind.

**12.** Verfahren nach Anspruch 9, wobei die Prozedur zum Ableiten eines charakteristischen Zählwerts eine durchschnittliche Anzahl von Verlustanzeigeereignissen, die außerhalb der Dateneinheitsübertragungsvorrichtung in dem in die Warteschlange eingereihten Fluss eintreten, als charakteristischer Zählwert bestimmt.

**13.** Verfahren nach einem der Ansprüche 6 bis 12, wie abhängig von Anspruch 5, wobei die automatische Moduseinstellprozedur ein Ergebnis der Verlustanzeigeereignis-Detektionsprozedur berücksichtigt.

**14.** Verfahren nach einem der Ansprüche 6 bis 13, wobei die automatische Schwellenwertanpassungsprozedur ein Ergebnis der Verlustanzeigeereignis-Detektionsprozedur zum dynamischen Anpassen des Schwellenwerts (Lth) im ersten oder im zweiten Anpassungsmodus berücksichtigt.

**15.** Verfahren nach einem der Ansprüche 6 bis 14, wobei die Überlastmeldungsprozedur einen Entscheidungsschritt zum Entscheiden umfasst, ob eine Überlastmeldungsprozedur in Bezug auf eine oder mehrere Dateneinheiten durchzuführen ist, wobei der Entscheidungsschritt vom Ergebnis der Verlustanzeigeereignis-Detektionsprozedur abhängt.

**16.** Verfahren nach Anspruch 15, umfassend ein Überwachen, ob ein Ereignis, das einen potenziellen Dateneinheitsverlust in einem in eine Warteschlange eingereihten Fluss anzeigt, innerhalb einer vorbestimmten Zeitdauer eintritt, nachdem detektiert wird, dass der Wert des Längenparameters (QL) in Bezug auf die Länge der Warteschlange größer als der Längenschwellenwert (Lth) ist, und der Entscheidungsschritt, wenn ein Ereignis anzeigt, dass ein potenzieller Dateneinheitsverlust innerhalb der vorbestimmten Zeitdauer eintritt, ein Nichtdurchführen einer Überlastmeldung und andernfalls ein Durchführen der Überlastmeldung umfasst.

**17.** Verfahren nach einem der Ansprüche 1 bis 16, wobei der Warteschlangenpuffer so ausgelegt ist, dass er mindestens eine erste Warteschlange und eine zweite Warteschlange speichert, und die automatische Schwellenwertanpassungsprozedur einen ersten Schwellenwert, der mit der ersten Warteschlange assoziiert ist, gemäß dem ersten Anpassungsmodus anpasst und einen zweiten Schwellenwert, der mit der zweiten Warteschlange assoziiert ist, gemäß dem zweiten Anpassungsmodus anpasst.

18. Verfahren nach Anspruch 17, umfassend eine Unterscheidungs- und Anordnungsprozedur zum Unterscheiden von in eine Warteschlange einzureihenden Dateneinheiten auf der Basis ihrer Inhalte und Anordnen der Dateneinheiten in die erste oder die zweite Warteschlange in Abhängigkeit von einem Unterscheidungsergebnis.

19. Warteschlangenpuffersteuerung (10) zum Steuern eines Warteschlangenpuffers (20) in einer Dateneinheitsübertragungsvorrichtung (50), wobei der Warteschlangenpuffer (20) so ausgelegt ist, dass er Dateneinheiten (30) in eine Warteschlange (21) einreiht, und mit einem Übertragungsabschnitt (40) verbunden ist, umfassend:

einen Warteschlangenlängendeterminator (101) zum Bestimmen eines Wertes eines Längenparamters (QL), der mit der Länge der Warteschlange (21) assoziiert ist,
einen Komparator (102) zum Vergleichen des Wertes mit einem Längenschwellenwert (Lth),
einen Überlastmelder (103) zum Durchführen einer Überlastmeldungsprozedur, wenn der Wert größer als der Längenschwellenwert ist, und
einen Schwellenwertadapter (104) zum automatischen Anpassen des Längenschwellenwerts (Lth) durch Bestimmen eines Wertes der Übertragungsabschnittskapazität basierend auf der Datenrate des Übertragungsabschnitts (40) und Anpassen des Längenschwellenwerts (Lth) basierend auf dem bestimmten Wert der Übertragungsabschnittskapazität,
**dadurch gekennzeichnet, dass**
der Schwellenwertadapter (104) in einem von mindestens einem ersten und einem zweiten Anpassungsmodus betrieben werden kann, wobei der erste Anpassungsmodus mit einem Minimieren von Verzögerung des Warteschlangenbetriebs und Anpassen des Schwellenwerts (Lth) auf der Basis $n \cdot LC$ verbunden ist, wobei LC den bestimmten Wert der Übertragungsabschnittskapazität darstellt und $n \geq 1$, und der zweite Anpassungsmodus mit einem Maximieren von Nutzung und Anpassen des Schwellenwerts (Lth) auf der Basis von $m \cdot LC$ verbunden ist, wobei $m > 1$ und $m > n$.

20. Warteschlangenpuffersteuerung nach Anspruch 19, wobei der Warteschlangenpuffer zum Empfangen von Dateneinheiten von einem Sender ausgelegt ist, der eine fensterbasierte Flusssteuerung durchführt und sein Sendefenster durch k teilt, wobei $k > 1$, wenn er eine Überlastmeldung empfängt oder wenn er einen Dateneinheitsverlust detektiert, wobei der Schwellenwertadapter (104) so ausgelegt ist, dass $n = k - 1$ und $m = k^2 - 1$.

21. Warteschlangenpuffersteuerung nach Anspruch 20, wobei $k = 2$, $n = 1$ und $m = 3$.

22. Warteschlangenpuffersteuerung nach einem Ansprüche 19 bis 21, umfassend einen Einstellmechanismus zum manuellen Einstellen des ersten Modus oder des zweiten Modus durch einen Bediener.

23. Warteschlangenpuffersteuerung nach einem der Ansprüche 19 bis 22, umfassend einen automatischen Moduseinstellmechanismus zum automatischen Einstellen des ersten Modus oder des zweiten Modus.

24. Warteschlangenpuffersteuerung nach einem der Ansprüche 19 bis 23, umfassend einen Verlustanzeigeereignisdetektor (105) zum Detektieren von potenziellen Dateneinheitsverlusten außerhalb der Dateneinheitsübertragungsvorrichtung (50) in einem Fluss, der im Warteschlangenpuffer in eine Warteschlange eingereiht ist.

25. Warteschlangenpuffersteuerung nach Anspruch 24, wobei der Verlustanzeigeereignisdetektor (105) einen Überwacher zum Überwachen von Reihenfolgekennungen von Dateneinheiten in dem in die Warteschlange eingereihten Fluss umfasst.

26. Warteschlangenpuffersteuerung nach Anspruch 24 oder 25, wobei der Verlustanzeigeereignisdetektor (105) einen Überwacher zum Überwachen von Verlustanzeigeinformationen in Bestätigungsdateneinheiten umfasst, die von einem Empfänger des in die Warteschlange eingereihten Flusses an den Sender des in die Warteschlange eingereihten Flusses gesendet werden.

27. Warteschlangenpuffersteuerung nach einem der Ansprüche 24 bis 26, umfassend:

einen Zähler zum Zählen einer Anzahl von Dateneinheitsverlustanzeigeereignissen, die außerhalb der Dateneinheitsübertragungseinheit in dem in die Warteschlange eingereihten Fluss eintreten, und

einen Zählanzahlprozessor zum Ableiten eines charakteristischen Zählwerts aus den gezählten Anzahlen.

28. Warteschlangenpuffersteuerung nach Anspruch 27, wobei der Zählanzahlprozessor so ausgelegt ist, dass er die Anzahl von Verlustanzeigeereignissen, die außerhalb der Dateneinheitsübertragungsvorrichtung in dem in die Warteschlange eingereihten Fluss eintreten, in jedem von p jeweiligen vorbestimmten Intervallen bestimmt, wobei p eine natürliche Zahl ist, und ein Maximum unter den Anzahlen als den charakteristischen Zählwert auswählt.

29. Warteschlangenpuffersteuerung nach Anspruch 28, wobei die vorbestimmten Intervalle als die Zeit zwischen zwei aufeinander folgenden Entscheidungen des Durchführens einer Überlastmeldung für eine Dateneinheit in dem in die Warteschlange eingereihten Fluss definiert sind.

30. Warteschlangenpuffersteuerung nach Anspruch 27, wobei der Zählanzahlprozessor so ausgelegt ist, dass er eine durchschnittliche Anzahl von Verlustanzeigeereignissen, die außerhalb der Dateneinheitsübertragungsvorrichtung in dem in die Warteschlange eingereihten Fluss eintreten, als charakteristischer Zählwert bestimmt.

31. Warteschlangenpuffersteuerung nach einem der Ansprüche 24 bis 30, wie von Anspruch 23 abhängig, wobei der automatische Moduseinstellmechanismus so ausgelegt ist, dass er eine Ausgabe des Verlustanzeigeereignisdetektors berücksichtigt.

32. Warteschlangenpuffersteuerung nach einem der Ansprüche 24 bis 31, wobei der Schwellenwertadapter (104) so ausgelegt ist, dass er eine Ausgabe der Verlustanzeigeereignis-Detektionsprozedur zum dynamischen Anpassen des Schwellenwerts (Lth) im ersten oder im zweiten Anpassungsmodus berücksichtigt.

33. Warteschlangenpuffersteuerung nach einem der Ansprüche 24 bis 32, wobei der Überlastmelder (103) eine Entscheidungseinheit (1031) zum Entscheiden umfasst, ob eine Überlastmeldungsprozedur in Bezug auf eine oder mehrere Dateneinheiten durchzuführen ist, wobei die Entscheidungseinheit (1031) so ausgelegt ist, dass sie eine Ausgabe des Verlustanzeigeereignisdetektors (105) berücksichtigt.

34. Warteschlangenpuffersteuerung nach Anspruch 33, der Verlustanzeigeereignisdetektor (105) so ausgelegt ist, dass er überwacht, ob ein Ereignis, das einen potenziellen Dateneinheitsverlust in einem in eine Warteschlange eingereihten Flusses anzeigt, innerhalb einer vorbestimmten Zeitdauer eintritt, nachdem detektiert wird, dass der Wert des Längenparameters (QL) in Bezug auf die Länge der Warteschlange größer als der Längenschwellenwert (Lth) ist, und die Entscheidungseinheit (1031) so ausgelegt ist, dass sie eine Überlastmeldung nicht durchführt, wenn ein Ereignis anzeigt, dass ein potenzieller Dateneinheitsverlust innerhalb der vorbestimmten Zeitdauer eintritt, und andernfalls die Überlastmeldung durchführt.

35. Warteschlangenpuffersteuerung nach einem der Ansprüche 19 bis 34, wobei der Warteschlangenpuffer so ausgelegt ist, dass er mindestens eine erste Warteschlange und eine zweite Warteschlange speichert, und der Schwellenwertadapter zum Anpassen eines ersten Schwellenwerts, der mit der ersten Warteschlange assoziiert ist, gemäß dem ersten Anpassungsmodus und Anpassen eines zweiten Schwellenwerts, der mit der zweiten Warteschlange assoziiert ist, gemäß dem zweiten Anpassungsmodus ausgelegt ist.

36. Warteschlangenpuffersteuerung nach Anspruch 35, umfassend eine Unterscheidungs- und Anordnungsprozedur zum Unterscheiden von in eine Warteschlange einzureihenden Dateneinheiten auf der Basis ihrer Inhalte und Anordnen der Dateneinheiten in die erste oder zweite Warteschlange in Abhängigkeit von einem Unterscheidungsergebnis.

**Revendications**

1. Procédé de commande d'une mémoire tampon de file d'attente (20) dans un dispositif de transmission d'unités de données (50), ladite mémoire tampon de file d'attente étant agencée pour mettre les unités de données (30) dans une file d'attente (21) et étant connectée à une liaison (40), comprenant de :

déterminer (S1) une valeur (QL) d'un paramètre de longueur relatif à la longueur de ladite file d'attente, comparer (S2) ladite valeur (QL) avec une valeur seuil de longueur (Lth) et effectuer (S3) une procédure de notification d'engorgement en ce qui concerne une ou des unités de données de ladite file d'attente si ladite valeur (QL) est supérieure à ladite valeur seuil de longueur (Lth), et

une procédure d'adaptation de seuil automatique (S5) qui comprend d'estimer une valeur de capacité de liaison sur la base du débit de données de ladite liaison (40) et adapter ladite valeur seuil (Lth) sur la base de ladite valeur de capacité de liaison estimée,

**caractérisé en ce que**

ladite procédure d'adaptation de seuil automatique (S5) est opérationnelle dans un d'au moins un premier et un second mode d'adaptation, ledit premier mode d'adaptation étant associé à la minimisation du délai de mise en file d'attente et l'adaptation de ladite valeur seuil (Lth) sur la base de $n \cdot LC$, où LC représente la valeur de capacité de liaison estimée et $n \geq 1$, et ledit second mode d'adaptation étant associé à la maximisation de l'utilisation et l'adaptation de ladite valeur seuil (Lth) sur la base de $m \cdot LC$, où $m > 1$ et $m > n$.

2. Procédé selon la revendication 1, ladite mémoire tampon de file d'attente étant agencée pour recevoir des unités de données d'un émetteur qui effectue une commande flux basée sur fenêtre et divise sa fenêtre d'émission en k, $k > 1$, lors de la réception d'une notification d'engorgement ou lors de la détection d'une perte d'unités de données, dans lequel $n = k = 1$ et $m = k^2 - 1$.

3. Procédé selon la revendication 2, dans lequel $k = 2$, $n = 1$ et $m = 3$.

4. Procédé selon une des revendications 1 à 3, dans lequel un réglage dudit premier mode ou dudit second est fait manuellement par un opérateur.

5. Procédé selon une des revendications 1 à 3, comprenant une procédure de réglage de mode automatique pour régler automatiquement ledit premier mode ou ledit second mode.

6. Procédé selon une des revendications 1 à 5, comprenant une procédure de détection d'évènement d'indication de perte pour détecter des pertes d'unités de données potentielles dudit dispositif de transmission d'unités de données (50) dans un flux mis en file d'attente dans ladite mémoire tampon de file d'attente.

7. Procédé selon la revendication 6, dans lequel ladite procédure de détection d'évènement d'indication de perte comprend de surveiller des identifiants de séquence des unités de données dans ledit flux mis en file d'attente.

8. Procédé selon la revendication 6 ou 7, dans lequel ladite procédure de détection d'évènement d'indication de perte comprend de surveiller une information d'indication de perte dans des unités de données d'accusé de réception reçues depuis un récepteur dudit flux mis en file d'attente vers l'émetteur dudit flux mis en file d'attente.

9. Procédé selon une des revendications 6 à 8, où ladite procédure de détection d'évènement d'indication de perte comprend :

une procédure de comptage pour compter un nombre d'évènements d'indication de perte d'unités de données ayan lieu à l'extérieur dudit dispositif de transmission d'unités de données dans ledit flux mis en file d'attente, et une procédure de déduction d'une valeur de comptage caractéristique d'après lesdits nombres comptés.

10. Procédé selon la revendication 9, dans lequel ladite procédure de détection d'une valeur de comptage caractéristique détermine le nombre d'évènements d'indication de perte ayant lieu à l'extérieur dudit dispositif de transmission d'unités de données dans ledit flux mis en file d'attente dans chacun de p intervalles prédéterminés respectifs, p étant un nombre naturel, et sélectionne un maximum parmi lesdits nombres comme ladite valeur de comptage caractéristique.

11. Procédé selon la revendication 10, dans lequel lesdits intervalles prédéterminés sont définis comme le temps entre deux décisions consécutives d'effectuer une notification d'engorgement pour une unité de données dans ledit flux mis en file d'attente.

12. Procédé selon la revendication 9, dans lequel ladite procédure de déduction d'une valeur de comptage caractéristique détermine un nombre moyen d'évènements d'indication de perte ayant lieu à l'extérieur dudit dispositif de transmission d'unités de données dans ledit flux mis en file d'attente comme ladite valeur de comptage caractéristique.

13. Procédé selon une des revendications 6 à 12 en dépendance de la revendication 5, dans lequel ladite procédure de réglage de mode automatique prend en compte un résultat de ladite procédure de détection d'évènement d'indication de perte.

**14.** Procédé selon une des revendications 6 à 13, où ladite procédure d'adaptation de seuil automatique prend en compte un résultat de ladite procédure de détection d'évènement d'indication de perte pour adapter dynamiquement ladite valeur seuil (Lth) dans ledit premier et ledit second mode d'adaptation.

**15.** Procédé selon une des revendications 6 à 14, dans lequel ladite procédure de notification d'engorgement comprend une étape de décision pour décider si effectuer une procédure de notification d'engorgement en ce qui concerne une ou des unités de données, laquelle étape de décision dépend du résultat de ladite procédure de détection d'évènement d'indication de perte.

**16.** Procédé selon la revendication 15, comprenant de surveiller si un évènement qui indique une perte d'unité de données potentielle dans une flux mis en file d'attente a lieu à l'intérieur d'une période de temps prédéterminée après qu'il est détecté que ladite valeur dudit paramètre de longueur (QL) relatif à la longueur de ladite file d'attente est supérieure à ladite valeur seuil de longueur (Lth), et ladite étape de décision comprend de ne pas effectuer une notification d'engorgement si un évènement indiquant une perte d'unités de données potentielle a lieu à l'intérieur de ladite période de temps prédéterminée, et sinon effectuer ladite notification d'engorgement.

**17.** Procédé selon une des revendications 1 à 16, dans lequel ladite mémoire tampon de file d'attente est agencée pour détenir au moins une première file d'attente et une seconde file d'attente, ladite procédure d'adaptation de seuil automatique adaptant une première valeur de seuil associée à ladite première queue conformément audit premier mode d'adaptation et adaptant une seconde valeur seuil associée à ladite seconde file d'attente conformément audit second mode d'adaptation.

**18.** Procédé selon la revendication 17, comprenant une procédure de distinction et placement pour distinguer les unités de données à mettre en file d'attente sur la base de leurs contenus et placer les unités de données dans ladite première et seconde file d'attente en fonction d'un résultat de distinction.

**19.** Contrôleur de mémoire tampon de file d'attente (10) pour commander une mémoire tampon de file d'attente (20) dans un dispositif de transmission d'unités de données (50), ladite mémoire tampon de file d'attente (20) étant agencée pour mettre des unités de données (30) dans une file d'attente (21) et étant connectée à une liaison (40), comprenant

un déterminateur de longueur de file d'attente (101) pour déterminer une valeur d'un paramètre de file d'attente (QL) relatif à la longueur de ladite file d'attente (21),

un comparateur (102) pour comparer ladite valeur avec une valeur seuil de longueur (Lth),

un notificateur d'engorgement (103) pour effectuer une procédure de notification d'engorgement su ladite valeur est supérieure à ladite valeur seuil de longueur, et

un adaptateur de seuil (104) pour adapter automatiquement ladite valeur seuil de longueur (Lth) en estimant une valeur de capacité de liaison sur la base du débit de données de ladite liaison (40) et adapter ladite valeur seuil de longueur (Lth) sur la base de ladite valeur de capacité de liaison estimée,

**caractérisé en ce que**

ledit adaptateur de seuil (104) est opérationnel dans un d'au moins un premier et un second mode d'adaptation, ledit premier mode d'adaptation étant associé à la minimisation du délai de mise en file d'attente et l'adaptation de ladite valeur seuil (Lth) sur la base de $n \cdot LC$, où LC représente la valeur de capacité de liaison estimée et $n \geq 1$, et ledit second mode d'adaptation étant associé à la maximisation de l'utilisation et l'adaptation de ladite valeur seuil (Lth) sur la base de $m \cdot LC$, où $m > 1$ et $m > n$.

**20.** Contrôleur de mémoire tampon de file d'attente selon la revendication 19, ladite mémoire tampon de file d'attente étant agencée pour recevoir des unités de données d'un émetteur qui effectue une commande flux basée sur fenêtre et divise sa fenêtre d'émission en k, $k > 1$, lors de la réception d'une notification d'engorgement ou lors de la détection d'une perte d'unités de données, dans lequel $n = k-1$ et $m = k^2 - 1$.

**21.** Contrôleur de mémoire tampon de file d'attente selon la revendication 20, dans lequel $k = 2$, $n = 1$ et $m = 3$.

**22.** Contrôleur de mémoire tampon de file d'attente selon une des revendications 19 à 21, comprenant un mécanisme de réglage pour le réglage manuel dudit premier mode et dudit second mode par un opérateur.

**23.** Contrôleur de mémoire tampon de file d'attente selon une des revendications 19 à 22, comprenant un mécanisme de réglage de mode automatique pour régler automatiquement ledit premier mode ou ledit second mode.

**24.** Contrôleur de mémoire tampon de file d'attente selon une des revendications 19 à 23, comprenant un détecteur d'évènement d'indication de perte (105) pour détecter des pertes d'unités de données potentielles à l'extérieur dudit dispositif de transmission d'unités de données (50) dans une flux mis en file d'attente dans ladite mémoire tampon de file d'attente.

**25.** Contrôleur de mémoire tampon de file d'attente selon la revendication 24, dans lequel ledit détecteur d'évènement d'indication de perte (105) comprend un moniteur pour surveiller des identifiants de séquence d'unités de données dans ledit flux mis en mémoire tampon.

**26.** Contrôleur de mémoire tampon de file d'attente selon la revendication 24 ou 25, dans lequel ledit détecteur d'évènement d'indication de perte (105) comprend un moniteur pour surveiller une information d'indication de perte dans des unités de données d'accusé de réception envoyées depuis un récepteur dudit flux mis en file d'attente vers l'émetteur dudit flux mis en file d'attente.

**27.** Contrôleur de mémoire tampon de file d'attente selon une des revendications 24 à 26, comprenant :

un compteur pour compter un nombre d'évènements d'indication de perte d'unités de données ayant lieu à l'extérieur dudit dispositif de transmission d'unités de données dans ledit flux mis en file d'attente, et
un processeur de nombre de comptage pour déduire une valeur de comptage caractéristique desdits nombres comptés.

**28.** Contrôleur de mémoire tampon de file d'attente selon la revendication 27, dans lequel ledit processeur de nombre de comptage est agencé pour déterminer le nombre d'évènements d'indication de perte ayant lieu à l'extérieur dudit dispositif de transmission d'unités de données dans ledit flux mis en file d'attente dans chacun de p intervalles de temps prédéterminés respectifs, p étant un nombre naturel, et sélectionner un maximum parmi lesdits nombres comme ladite valeur de comptage caractéristique.

**29.** Contrôleur de mémoire tampon de file d'attente selon la revendication 28, dans lequel lesdits intervalles prédéterminés sont définis comme le temps entre deux décisions consécutives d'effectuer une notification d'engorgement pour une unité de données dans ledit flux mis en file d'attente.

**30.** Contrôleur de mémoire tampon de file d'attente selon la revendication 27, dans lequel ledit processeur de nombre de comptage est agencé pour déterminer un nombre moyen d'évènements d'indication de perte ayant lieu à l'extérieur dudit dispositif de transmission d'unités de données dans ledit flux mis en file d'attente comme ladite valeur de comptage caractéristique.

**31.** Contrôleur de mémoire tampon de file d'attente selon une des revendications 24 à 30 en dépendance de la revendication 23, dans lequel ledit mécanisme de réglage de mode automatique est agencé pour prendre en compte une sortie dudit détecteur d'évènement d'indication de perte.

**32.** Contrôleur de mémoire tampon de file d'attente selon une des revendications 24 à 31, où ledit adaptateur de seuil (104) est agencé pour prendre en compte une sortie de ladite procédure de détection d'évènement d'indication de perte pour adapter dynamiquement ladite valeur seuil (Lth) dans ledit premier ou ledit second mode d'adaptation.

**33.** Contrôleur de mémoire tampon de file d'attente selon une des revendications 24 à 32, dans lequel ledit notification d'engorgement (103) comprend une unité de décision (1031) pour décider si effectuer une notification d'engorgement en ce qui concerne une ou des unités de données, laquelle unité de décision (1031) est agencée pour prendre en compte une sortie dudit détecteur d'évènement d'indication de perte (105).

**34.** Contrôleur de mémoire tampon de file d'attente selon la revendication 33, dans lequel ledit détecteur d'évènement d'indication de perte (105) est agencé pour surveiller si un évènement qui indique une perte d'unité de données potentielle dans un flux mis en file d'attente a lieu à l'intérieur d'une période de temps prédéterminée après qu'il est détecté que ladite valeur dudit paramètre de longueur (QL) relatif à la longueur de ladite file d'attente est supérieure à ladite valeur seuil de longueur (Lth), et ladite étape de décision (1031) comprend de ne pas effectuer une notification d'engorgement si un évènement indiquant une perte d'unités de données potentielle a lieu à l'intérieur de ladite période de temps prédéterminée, et sinon effectuer ladite notification d'engorgement.

**35.** Contrôleur de mémoire tampon de file d'attente selon une des revendications 19 à 34, dans lequel ladite mémoire tampon de file d'attente est agencée pour détenir au moins une première file d'attente et une seconde file d'attente, ladite procédure d'adaptation de seuil automatique adaptant une première valeur de seuil associée à ladite première queue conformément audit premier mode d'adaptation et adaptant une seconde valeur seuil associée à ladite seconde file d'attente conformément audit second mode d'adaptation.

36. Contrôleur de mémoire tampon de file d'attente selon la revendication 35, comprenant une unité de distinction et placement pour distinguer les unités de données à mettre en file d'attente sur la base de leurs contenus et placer les unités de données dans ladite première et seconde file d'attente en fonction d'un résultat de distinction.

**Fig. 1**

```
                    ┌─────────────┐
                    │    Start    │
                    └─────────────┘
                           │
                           ▼
              ┌──────────────────────┐
              │    Determine QL      │  S1
              └──────────────────────┘
                           │
                           ▼
          S2          ╱─────────╲
                    ╱             ╲                    ┌──────────────────┐
                  ╱    QL ≥ Lth     ╲     Yes          │   Congestion     │  S3
                  ╲        ?        ╱──────────────────▶│   notification   │
                    ╲             ╱                     │   procedure      │
                      ╲─────────╱                       └──────────────────┘
                           │                                     │
                          No                                     │
                           │◀────────────────────────────────────┘
                           ▼
              ┌──────────────────────┐
              │ Loss indication event│  S4
              │      detection       │
              └──────────────────────┘
                           │
                           ▼
              ┌──────────────────────┐
              │ Adaptation procedure │  S5
              │       for Lth        │
              └──────────────────────┘
                           │
                           ▼
                    ┌─────────────┐
                    │     End     │
                    └─────────────┘
```

**Fig. 2**

**Fig. 3**

Start

Determine QL    S1

S2

QL ≥ Lth
?    Yes →    Congestion
notification
procedure    S3

No

Adaptation procedure
for Lth    S5

End

**Fig. 4**

**REFERENCES CITED IN THE DESCRIPTION**

**Patent documents cited in the description**

- EP 1249972 A